# EUROPEAN PATENT APPLICATION

(11) **EP 4 443 399 A1**
(43) Date of publication of application: **09.10.2024**
(21) Application number: 23166364.2
(22) Date of filing: 03.04.2023
(51) Int. Cl.: G07C 9/00, B60R 25/25

(54) **ACCESS VERIFICATION SYSTEM AND METHOD FOR VEHICLE AND VEHICLE**

(71) Applicant: Volvo Car Corporation, 405 31 Göteborg (SE)
(72) Inventor: ORBAY, Raik, 40531 Göteborg (SE)
(74) Representative: Maiwald GmbH

(57) **Abstract**

The disclosure relates to an access verification system (100) for a vehicle (200), comprising a monitoring unit (102) configured to detect a motion near the vehicle (200), comprising at least one sensor (1021) configured to detect a motion near the vehicle (200); and a sensor data processing unit (1022) configured to determine if the detected motion corresponds to at least one motion-characteristic of a person (112) approaching the vehicle (200), a verification unit (104) configured to be activated, when the motion detected by the monitoring unit (102) is a motion-characteristic of a person (112), and when the detected motion is equal to or larger than a predetermined motion- threshold, and configured to determine if the person (112) approaching the vehicle (200) corresponds to a registered person by comparing the at least one characteristic of the person (112) detected by the monitoring unit (102) with at least one pre-registered motion-characteristic of the at least one registered person, and a processing unit (108) configured to provide the person (112) access to the vehicle (200). Further, the disclosure relates to an access verification method (300).

## Description

### TECHNICAL FIELD

The present disclosure relates to an access verification system for a vehicle, an access verification method for a vehicle and a vehicle.

### BACKGROUND ART

Apart from the classic car key for opening a vehicle, various other portable objects are known, which can be used to open the vehicle, e.g., key cards, key fobs, tags, like airtags, etiquette hang tags, and/or mobile phones. Furthermore, using sensitive data, like fingerprints and/or facial recognition, and/or voice recognition, is known to identify whether an individual is authorized to have access, particularly with regard to mobile devices, such as smartphones, tablets, laptops etc., but also with regard to vehicles.

### SUMMARY

There may, therefore, be a need to provide an improved access verification method and/or access verification system for a vehicle, which allows identifying a person being registered or authorized to have access to a vehicle, particularly working without the need of physical objects and/or sensitive biometric data for identification and authentication.

The object of the present disclosure is at least partially solved or alleviated by the subject-matter of the appended independent claims, wherein further examples are incorporated in the dependent claims.

According to a first aspect, there is provided an access verification system for a vehicle. The access verification system comprises a monitoring unit, a verification unit, and a processing unit. The monitoring unit is configured to detect a motion within a predefined periphery of the vehicle and comprises at least one sensor and a sensor data processing unit.

### SE:FG

The at least one sensor is configured to non-visually detect a motion within the predefined periphery of the vehicle and the sensor data processing unit is configured to determine if the detected motion corresponds to at least one, motion-characteristic, particularly a dynamic, and more particularly a biometric motion-characteristic, of a person. The verification unit is configured to be activated, when the motion detected by the monitoring unit is a motion-characteristic of a person, and when the detected motion is equal to or larger than a predetermined motion-threshold. Further, the verification unit is configured to determine if the person corresponds to a, particularly predetermined, registered person by comparing the at least one motion-characteristic of the person detected by the monitoring unit with at least one pre-registered motion-characteristic of the at least one registered person. The processing unit is configured to provide the person access to the vehicle, when the person is verified or identified as a registered person.

The system allows identifying a person within a predefined periphery of the vehicle, particularly a person, which approaches the vehicle, by a motion-characteristic, particularly by a gait or gait characteristics, without the need of image-based data and/or physical objects, like key cards, tags, mobile phones etc. Therefore, the system does not require sensitive biometric data, which, when getting in the wrong hands may be misused easily. The gait, this means, the way of walking, is individual, every person has a certain, unique gait, characteristics of which is difficult to copy by another person. Thus, the gait corresponds to a type of biometric data, which allows identifying a person, without the need of image-based or other sensitive biometric data, like face recognition, iris images, fingerprints, and the like.

The system may use machine learning to learn and/or to identify motion-characteristics, particularly related to the gait of a person, such as walking speed, e.g., a time interval between two consecutive steps, a walking rhythm, e.g., skewness, and/or a way of walking, e.g., duration and/or intensity of certain foot parts (heel, toes etc.) touching the ground. Present research shows that the identification of a person through recognizing the gait allows a high accuracy, particularly an accuracy up to around 98%, given that the system is properly trained.

The at least one sensor being comprised by the monitoring unit and configured to non-visually detect a motion may be also referred to as a non-visual based sensor or a non-visual sensor. The at least one sensor may be a sensor, which is already available in the vehicle. In other words, the at least one sensor may be a sensor, which is already existing or implemented in the vehicle, e.g., as an ADAS component. The motion-characteristic of a person may be particularly a dynamic motion-characteristic, such as a geometric and/or spatial and/or temporal and/or harmonic and/or behavioral characteristic or trait unique to a person. Furthermore, the at least one sensor may be configured to detect an environment-originating motion being a motion caused by flora and/or fauna and/or light changes and/or time of day and/or weather changes and the like in the surrounding of the vehicle. The sensor data processing unit may be configured to distinguish, based on the data from the at least one sensor, whether the motion-characteristic detected by the at least one sensor corresponds to a motion-characteristic of a person or to an environment-originating motion. The motion-threshold may then define a threshold for when the person being detected within the predetermined periphery of the vehicle is close enough to the vehicle to detect the motion-characteristic with an increased accuracy to be able to determine whether the approaching person correspond to a registered person or a spurious signal.

According to an example, the pre-registered motion-characteristic of the at least one registered person may be stored in a respective user profile, wherein the respective user profile being created for each registered person. Further, the respective user profile may be stored in a storage unit.

The user profile may allow storing various information with regard to the respective registered person in bundles. For example, there may be more than one pre-registered motion-characteristic for one registered person, all of which being stored in the respective user profile of this respective registered person. The storage unit may be an encrypted storage unit.

According to an example, the processing unit may be configured to provide the person being verified as the at least one registered person access to the vehicle by unlocking the vehicle and/or by setting vehicle functions/settings, such as access to assistance systems, a maximum speed, use of entertainment system, etc. according to an access level being assigned to the user profile of the verified person.

The access level being assigned to the user profile of the identified person may manage or control access to different vehicle functions and/or settings, like assistance systems, navigation, maximum speed, use of entertainments system, and other settings as well as e.g., the access to luggage compartments etc. Thus, the access level may allow a vehicle owner to individually configure the access to the vehicle for each registered person. For example, by setting a maximum speed, the vehicle owner may prevent a young driver from driving too fast. The vehicle may be an air vehicle, e.g., an airplane, a land vehicle, e.g., a car, a truck etc., a sea vehicle, e.g., a boat, and/or a spacefaring vehicle, e.g., a rocket.

According to an example, the system may further comprise a registration unit configured to learn the at least one motion-characteristic of a person to be registered, and may be configured to register the person by storing the previous learned motion-characteristic as the pre-registered motion-characteristic in the user profile.

Thus, the system may allow the access to the vehicle to more than one person. Furthermore, it may be possible, that the user profiles are stored in a distributed, particularly encrypted, storage unit, such that the data stored in the user profile is accessible for more than one vehicle.

According to an example, the registration unit may use, among other tools and/or mathematical approaches, machine learning to register the at least one motion- characteristic of the person to be registered. Besides machine learning, the registration unit may use additional and/or alternative inferential statistics. The other tools and/or mathematical approaches may comprise descriptive statistics.

By using the machine learning, the registration unit may identify the motion-characteristics being unique to the person to be registered. Thus, it may be necessary that the person repeats the same action, particularly walking, a few times while the registration unit will pinpoint characteristics in the gait, which result in a gait pattern unique to that person, by performing machine learning, and/or other mathematical computations, subsequently creating a unique signature related to the individual to be registered by the system. Thereby, it may be further possible that the person may perform the same action several times substantially in the same way and/or it may be possible that the person may need to perform different actions and/or substantially the same action in slightly different ways. For example, it may be possible that the person needs to walk in a normal speed, and additionally in a faster speed and/or lower speed, with the same shoes and/or different shoes etc. to increase the identifying accuracy of the system.

According to an example, the verification unit may use machine learning to determine whether the person being detected within the predefined periphery of the vehicle corresponds to a registered person.

During the learning and/or training process of the system, as well as during the verification process performed by the verification unit, the system is in a normal operation mode, whereas during the monitoring process performed by the monitoring unit, the system is in an idle-like operation mode, which requires a reduced (low) energy consumption compared to the normal operation mode.

It may be possible that, in dark conditions, namely weather with decreased ambient light and/or fog, the at least one non-visual sensor, and in particular all sensors being usually used to monitor the surroundings of the vehicle for a motion, may not be able to capture enough data for an accurate detection. In such case, the system may initiate a sensor-support-request, by which supplementary sensors may be additionally activated for a predefined, particularly short, time-interval to provide additional sensor data for an accurate detection. Such time-limited sensor support, or sensor fusion, may disrupt the low energy operation mode just for the predefined time-interval.

According to an example, the storage unit may be a local, particularly encrypted, storage unit provided in the vehicle, or a distributed, particularly encrypted, storage unit provided in a cloud and/or a resource accessed through an edge communication.

As already mentioned above, the distributed storage unit may be accessible for more than one vehicle. The local storage unit may allow having access to the data stored in the user profiles without the need of an internet connection. The locally as well as the remotely stored data may be encrypted and/or blockchain secured.

According to an example, the distributed storage unit, particularly a cloud, may be configured to further accommodate the sensor data processing unit and/or the verification unit and/or the processing unit. In other words, except for the at least one non-visual sensor of the monitoring unit, at least part (or all) of the components comprised by the system may be stored and executed in the distributed storage unit. Thus, one can say that the distributed storage unit may not only be able to store data, but also to process data and/or execute processes. Thus, the distributed storage unit may also be referred to as a storage and processing unit. Thus, the distributed storage unit, this means, the distributed storage and processing unit, may allow executing the processes being performed by the sensor data processing unit and/or the verification unit and/or the processing unit for more than one vehicle by providing those units in the distributed storage unit, which allows access for more than one vehicle. Thus, since the at least one non-visual sensor of the monitoring unit corresponds to an already existing sensor, there are no additional components required in the car to implement the access verification system. Consequently, in this configuration, the system may be retrofittable to vehicles.

According to an example, the at least one sensor may be an ultrasound-based sensor and/or an electromagnetic-based sensor, particularly a WIFI-based sensor and/or an infrared-based sensor and/or a non-visual spectrum laser-based sensor. Further, there may be more provided more than one non-visual sensor. The plurality of non-visual sensors may be provided as a sensor-fusion or as an array of sensors.

Those sensors may allow recognizing the motion characteristics electromagnetically and/or acoustically with a high accuracy. Further, the recognition of the motion characteristics may be time-based.

According to an example, the at least one motion-characteristic is at least part of a gait pattern, such as a walking speed, e.g., a time-interval between two steps, and/or step intensity and or walking rhythm and/or way of walking. Particularly, the walking rhythm and/or the way of walking may be identified by autocorrelation, and/or cross-correlation of two steps and/or periodicity, seasonality, histogram skewness, and/or multimodality of short period cumulative data, frequency content, wavelet content, and/or step intensity, and the like. Additionally, or alternatively, further mechanical features, e.g., a number of toes touching the ground, duration of heel touching ground, a sole of feet or the heel prioritization during steps, and the like, may be included in an algorithm for registering and/or identifying a person's individual gait pattern. Thus, the gait pattern may allow to achieve a high accuracy for identifying a person.

According to an example, the system may further comprise at least one visual-based sensor, e.g., a camera, configured to capture at least the one -motion-characteristic visually, particularly without facial imagery. In particular, the visual-based sensor may be a visual light spectrum-based sensor. Alternatively, the visual-based sensor may be a sensor combining the visual light spectrum and the infrared spectrum, allowing the use of the visual sensor during daylight and/or during night or other dark light conditions, e.g., weather event causing decreased ambient light and/or fog.

According to an example, the motion-characteristic captured visually be the visual-based sensor may be based on silhouette images, e.g., pose-based.

The at least one visual-based sensor may allow improving the accuracy for identifying a person based on at least one motion-characteristic. In dark conditions, wheather events causing decreased ambient light, fog, additional help may be triggered by the system through the vehicle control unit, so that other sensors too may be activated for a short while to provide with data through sensor fusion for an accurate detection.

According to a second aspect, there is provided vehicle comprising an access verification system according to the first aspect.

The vehicle may be accessible to at least one registered, and thus authorized, person being identified by at least one motion-characteristic. Thus, no more key cards, tags, mobile phones etc. are required to access the vehicle.

According to a third aspect, there is provided an access verification method. The access verification method comprises the following:
detecting, by a monitoring system, a motion within a predefined periphery of the vehicle;
determining, by the monitoring system, if the detected motion corresponds to at least one motion-characteristic, particularly dynamic, more particularly biometric motion-characteristic, of a person,
activating a verification unit, when the motion detected by the monitoring unit, particularly by the at least one sensor ("non-visual sensor"), is a motion-characteristic of a person, and when the detected motion is equal to or larger than a predetermined motion-threshold,
determining, by the verification unit, if the person detected within the predefined periphery of the vehicle corresponds to a predetermined registered person by comparing the at least one motion-characteristic of the person detected by the monitoring system with at least one pre-registered motion-characteristic of the at least one registered person;
providing, by a processing unit, the person access to the vehicle, when the person is verified/identified as a registered person

The method allows verifying/identifying a person within a predefined periphery of the vehicle, particularly a person, which approaches the vehicle, by a motion characteristic, particularly by a gait or gait characteristics, without the need of image-based data and/or physical objects, like key cards, tags, mobile phones etc. Therefore, the method does not require sensitive biometric data, which, when getting in the wrong hands may be misused easily. The gait, this means, the way of walking, is individual, every person has a certain, unique gait, like a signature, which is difficult to copy by another person. Thus, the gait corresponds to a type of biometric data, which allows identifying a person, without the need of image-based or other sensitive biometric data, like face recognition, fingerprints, and the like.

The method may use machine learning to learn and/or to identify motion-characteristics, particularly related to the gait of a person, such as walking speed, e.g., a time interval between two consecutive steps, a walking rhythm, e.g., skewness in detected characteristics and in their histograms, and/or a way of walking, e.g., duration and/or intensity of certain foot parts (heel, toes etc.) touching the ground. Present research shows that the identification of a person through recognizing the gait allows a high accuracy, particularly an accuracy up to around 98%, given that the system is properly trained.

The method may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system geographically accommodated elsewhere. The data processing means or the computer, respectively, may comprise one or more of a processor, a memory, a data interface, or the like.

According to an example, the person within the predefined periphery of the vehicle may be verified/identified as a registered person when the at least one motion-characteristic of the person captured by the monitoring system, particularly by the at least one non-visual sensor, substantially corresponds to at least one motion-characteristic of the at least one registered person.

Thus, by comparing the captured motion-characteristic with the at least one motion-characteristic of the at least one, particularly more than one, registered person, the person detected within the predefined periohery of the vehicle may be easily identified.

According to an example, the method may further comprise learning, by a registration unit, the at least one motion-characteristic of a person to be registered, and registering a person by storing the previously learned motion-characteristic, e.g., in a storage unit and/or in a user profile.

Thus, by providing the registration unit, the method may be adaptable during lifetime. In other words, the method may allow adding persons as registered persons later on, and it may not be required to register all persons before a first use. Further, aging of individuals may be taken into consideration by the system, e.g., based upon medicine research devising the basis of universal geriatric traits, such as slower motion, slower pace, etc. In case of more abrupt changes, e.g., injuries, etc., the system, particularly the registration unit, may need to update, e.g., by recalibrating/reprogramming, the at least one dynamic motion-characteristic assigned to the person/individual in the user profile. Therefore, the individual using the system may need to walk again to register his/her/its updated motion-characteristics.

According to an example, the method may further comprise capturing, by a visual sensor, the motion-characteristic visually and/or acoustically and/or electromagnetically, wherein the visually captured motion-characteristic is based on silhouette images, e.g., pose-based silhouette images. The silhouette images may be created using visual-spectrum snapshots, as well as other parts of the electric spectrum may be used, e.g., by using a WIFI signal. Recent electromagnetics research points at the technology for detection of individuals in a house as human bodies are attenuating WIFI signals different than wave propagation in free space.

The at least one visual-based sensor may allow improving the accuracy for identifying a person based on at least one motion-characteristic.

According to a fourth aspect, there is provided a computer program element for access verification in a vehicle according to the second aspect, which, when being executed by a processing unit, being adapted to perform a method according to the third aspect.

It should be noted that the above examples may be combined with each other irrespective of the aspect involved. Accordingly, the method may be combined with structural features and, likewise, the system may be combined with features described above with regard to the method.

These and other aspects of the present disclosure will become apparent from and elucidated with reference to the embodiments described hereinafter.

### BRIEF DESCRIPTION OF DRAWINGS

Exemplary examples of the disclosure will be described in the following with reference to the following drawings.
- Fig. 1: shows schematically and exemplarily an access verification system according to the present disclosure.
- Fig. 2: shows schematically and exemplarily a flow diagram of an access verification unit according to the present disclosure.
- Fig. 3: shows schematically and exemplarily a vehicle according to the present disclosure.

The figures are merely schematic representations and serve only to illustrate examples of the disclosure. Identical or equivalent elements are in principle provided with the same reference signs.

### DESCRIPTION OF EMBODIMENTS

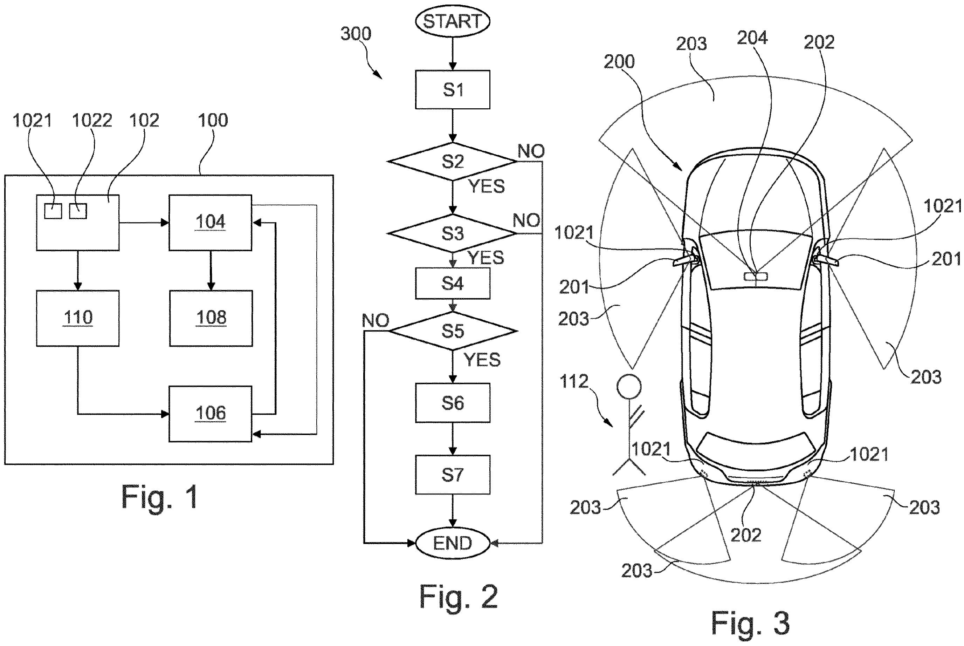

Figure 1 shows schematically and exemplarily a block diagram of an example of an access verification system 100 for a vehicle 200 (see Figure 3). The access verification system 100 comprises a monitoring unit 102, a verification unit 104, a storing unit 106, a processing unit 108, and a registration unit 110. The monitoring unit 102 comprises at least one non-visual sensor 1021 and a sensor data processing unit 1022. The at least one non-visual sensor 1021 is configured to detect a motion near the vehicle 200 and may be an ultrasound-based sensor, a radar-based sensor, a laser-based sensor and/or an electromagnetic sensor, and configured to detect the motion non-visually, particularly acoustically and/or electromagnetically. The sensor data processing unit 1022 receives the sensor data from the at least one non-visual sensor 1021 and determines based on the received data, whether the detected motion is a dynamic motion-characteristic of a person 112 (see Figure 3) approaching the vehicle 200, or an environmental-originating motion, such as an animal passing by the vehicle 200, trees etc., moving in the wind, light changes, weather changes etc. In dark conditions, e.g., during weather with decreased ambient light and/or fog, the system may initiate a sensor-support-request, by which additional sensors may be additionally activated for a predefined, particularly short, time-interval to provide additional sensor data for an accurate detection.

When the detected motion is determined to be a motion-characteristic of the person 112, and additionally, is determined to be equal to or larger than a predetermined motion-threshold, the verification unit 104 is activated. The verification unit 104 compares the detected motion-characteristic with at least one dynamic motion-characteristic of at least one registered person being stored in the storage unit 106. Thus, the verification unit 104 determines by the above-described comparison, whether the person 112 approaching the vehicle 200 corresponds to a registered person. The storage unit 106 stores user profiles of registered persons, the user profiles at least comprising one dynamic motion-characteristic of the respective registered person. In particular, the storage unit 106 may store user profiles of a plurality of registered persons and/or the user profiles may further comprise an access level, defining access rights to various functions and/or settings of the vehicle 200. The storage unit 106 may be a local storage unit provided on the vehicle 200, or may be a distributed storage unit, like a cloud and/or edge communication. In such case, the vehicle 200 communicated with the distributed storage unit via an internet-based connection.

The processing unit 108 receives from the verification unit the data comprising whether the detected motion corresponds to a motion-characteristic of a registered person, and unlocks the vehicle 200 for access, when the person 112 approaching the vehicle 200 has been verified as a registered person. Furthermore, in case, the user profile comprises information regarding an access level for the verified person, the processing unit automatically sets the vehicle function and/or settings according to the stored access level.

The registration unit 110 is used to register a person as a person having the authorization to access the vehicle 200. Thus, in case, a new person should be registered, the registration unit 110 learns at least one dynamic motion-characteristic of that person. To do so, the registration unit 110 may give the person to be registered instructions to perform certain movements. This may be done when the vehicle 200 is bought by the customer or at a service point at a later phase of the economic life of the vehicle 200. By detecting those movements, the registration unit 110, particularly by using machine learning, learns the at least one motion-characteristic or a plurality of motion-characteristics, particularly related to the gait, being specific and unique for that person. Then, the registration unit 110 sends the previously learned motion-characteristic to the storing unit 106, where it is stored in the respective user profile.

Figure 2 shows schematically a flow diagram of an example of an access verification method 300 for the vehicle 200. The method 300 comprises the following steps, wherein the steps are not necessarily performed in the presented order: In a step S1, a motion near the vehicle 200 is detected, e.g., by the monitoring unit 102. In a step S2, it is determined, e.g., by the monitoring unit 102, whether the detected motion corresponds to at least one dynamic motion-characteristic of a person 112 approaching the vehicle 200 or to an environment-originating motion. In case, the detected motion is determined to be an environment-originating motion (NO in step S2), the method 300 is terminated. However, in case the detected motion is determined to be a dynamic motion-characteristic (YES in step S2), it is detected whether the detected motion is equal to or larger than a predetermined motion-threshold (step S3). In case, the detected motion is smaller or less than a predetermined motion-threshold (NO in S3), the method is terminated.

In case, the detected motion is at least equal to the predetermined motion-threshold (YES in S3), the verification unit 104 is activated (step S4). In a step S5, it is determined, by the verification unit 104, whether the person 112 approaching the vehicle corresponds to a registered person. For example, in step S5, the verification unit 104 compares the detected motion-characteristic with the (at least one) motion-characteristic(s) of at least one registered gait signature for a person being stored in the storage unit 106. In case, the detected motion-characteristic does not correspond to any of the motion-characteristics related to registered persons being stored in the storage unit 106 (NO in S5), the method is terminated, and the vehicle 300 will be kept locked. In case, the detected motion-characteristic correspond to one of the motion-characteristics related to registered persons being stored in the storage unit 106 (YES in S5), the vehicle 200 is unlocked, e.g., by the processing unit 108, such that the person 112 (being identified as a registered person) approaching the vehicle 200, can access the vehicle 200 (step S6). Further, vehicle functions, like assistance systems, maximum speed, as well as settings, like the use of the entertainment system, use of the navigation system, etc. are set, e.g., by the processing unit 108 according to an access level assigned to the user profile of the person 112 being identified as a registered person (step S7). The processing unit 108 may have direct or indirect access to the vehicle functions and/or settings. For example, the indirect access may be via another module in the vehicle, particularly a vehicle control unit. In this case, the processing unit sends a request-signal to the vehicle control unit, which will set the vehicle functions and/or settings accordingly.

Figure 3 shows schematically a top view of an example of the vehicle 200. The vehicle 200 exemplarily comprises two non-visual-based sensors 1021 and one visual-based sensor 202. The non-visual sensors 1021 exemplarily corresponds to sensors being arranged in the side mirrors 201, and originally implemented as sensors for detecting other vehicles being located to the side of the vehicle, an in particularly in an area called "blind spot area". While the vehicle 200 is parked, there is no need for monitoring the sides of the vehicle 200 for other vehicles, therefore, those sensors 201 can be used for monitoring the surrounding of the vehicle 200 for a motion. Since those sensors only have a restricted sensing or monitoring area (denoted with the number 203), another, already existing sensor may be used to monitor an additional section of the surroundings of the vehicle.

In Figure 3, it is exemplarily shown a visual-based sensor 202, e.g., a camera, being arranged in the back mirror 204 of the vehicle 200. The sensor 202 may also be pre-installed and used, e.g., as a distance-monitoring sensor to monitor a distance to a vehicle driving in front of the vehicle 300. While the vehicle 200 is parked, there is no need for monitoring a distance to another vehicle in front of the vehicle 200, and therefore, the sensor 202 can be used for monitoring an additional section of the surrounding of the vehicle 200 for a motion, in the example shown in Figure 3, an area in front of the vehicle 200. Further, in the back of the vehicle 200, non-visual sensors 1021, e.g., pre-installed and used as parking sensors and/or visual sensor 202, e.g., pre-installed and used as a camera when reversing.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 100: system
- 102: monitoring unit
- 1021: non-visual sensor
- 1022: sensor data processing unit
- 104: verification unit
- 106: storing unit
- 108: processing unit
- 110: registration unit
- 112: person
- 200: vehicle
- 201: side mirror
- 202: visual based sensor
- 203: sensing/monitoring area
- 204: back mirror
- 300: method

## Claims

1. An access verification system (100) for a vehicle (200), comprising:
a monitoring unit (102) configured to detect a motion within a predefined periphery of the vehicle (200), comprising:
at least one sensor (1021) configured to non-visually detect a motion within the predefined periphery of the vehicle (200); and
a sensor data processing unit (1022) configured to determine if the detected motion corresponds to at least one motion-characteristic of a person (112),
a verification unit (104) configured to be activated, when the motion detected by the monitoring unit (102) is a motion-characteristic of a person (112), and when the detected motion is equal to or larger than a predetermined motion-threshold, and configured to determine if the person (112) corresponds to a registered person by comparing the at least one motion-characteristic of the person (112) detected by the monitoring unit (102) with at least one pre-registered motion-characteristic of the at least one registered person
a processing unit (108) configured to provide the person (112) access to the vehicle when the person (112) is verified as a registered person.

2. The system (100) according to claim 1, the pre-registered motion-characteristic of the at least one registered person being stored in a respective user profile, the respective user profile being created for each registered person. further comprising a storage unit (106) configured to store the at least one user profile.

3. The system (100) according to claim 2, the user profile being stored in a storage unit (106).

4. The system (100) according to any of claims 1 to 3, the processing unit (108) is configured to provide the person (112) being verified as the at least one registered person access to the vehicle (200) by unlocking the vehicle (200) and/or by setting vehicle functions and/or settings according to an access level being assigned to the user profile of the verified person (112).

5. The system (100) according to any of claims 1 to 4, further comprising a registration unit (110) configured to learn the at least one motion-characteristic of a person (112) to be registered, and configured to register the person (112) by storing the previously learned motion-characteristic as the pre-registered motion-characteristic in the user profile.

6. The system (100) according to claim 5, wherein the registration unit (110) uses machine learning to register the at least one motion-characteristic of the person (112) to be registered.

7. The system (100) according to any of claims 3 to 6, wherein the storage unit (106) is a local storage unit provided in the vehicle (200), or a distributed storage unit provided in a cloud or a resource accessed through an edge communication.

8. The system (100) according to claim 7, wherein the distributed storage unit is configured to further comprise the sensor data processing unit (1022), the verification unit (104) and/or the processing unit (108).

9. The system (100) according to any of claims 1 to 8, wherein the at least one sensor (1021) is an ultrasound-based sensor, an electromagnetic-based sensor, an infrared-based sensor, and/or a laser-based sensor.

10. The system (100) according to any of claims 1 to 9, wherein the at least one motion-characteristic is a gait pattern, such as a time-interval between two steps, autocorrelation, cross-correlation of two steps in time, periodicity, seasonality, histogram skewness and multimodality of (short period) cumulative data, frequency content, wavelet content, and/or step intensity and/or walking rhythm and/or way of walking.

11. The system (100) according to any of claims 1 to 10, further comprising at least one visual-based sensor (202) configured to capture at least the one motion-characteristic acoustically and/or visually.

12. The system (100) according to claim 11, wherein the motion-characteristic captured visually by the visual-based sensor (202) is based on silhouette images.

13. A vehicle (200) comprising an access verification system (100) according to any of claims 1 to 12.

14. An access verification method (300) for a vehicle (200), comprising:
detecting a motion within a predefined periphery of the vehicle (200);
determining if the detected motion corresponds to at least one motion-characteristic of a person (112),
activating a verification unit (104), when the motion detected by the at least one sensor (1021) is a motion-characteristic of a person (112), and when the detected motion is equal to or larger than a predetermined motion-threshold,
determining, by the verification unit (104), if the person (112) detected within the predefined periphery of the vehicle (200) corresponds to a registered person by comparing the at least one characteristic of the person (112) detected by the monitoring unit (104) with at least one pre-registered motion-characteristic of the at least one registered person;
providing the person (112) access, when the person (112) is verified as a registered person.

15. A computer program element for access verification in a vehicle (200) according to claim 13, which, when being executed by a processing unit (108), being adapted to perform a method (200) according to claim 14.

## Amended claims

### Amended claims in accordance with Rule 137(2) EPC.

1. An access verification system (100) for a vehicle (200), comprising:
a monitoring unit (102) configured to detect a motion within a predefined periphery of the vehicle (200), comprising:
at least one sensor (1021) configured to non-visually detect a motion within the predefined periphery of the vehicle (200); and
a sensor data processing unit (1022) configured to determine if the detected motion corresponds to at least one motion-characteristic of a person (112),
a verification unit (104) configured to be activated, when the motion detected by the monitoring unit (102) is a motion-characteristic of a person (112), and when the detected motion is equal to or larger than a predetermined motion-threshold, and configured to determine if the person (112) corresponds to a registered person by comparing the at least one motion-characteristic of the person (112) detected by the monitoring unit (102) with at least one pre-registered motion-characteristic of the at least one registered person
a processing unit (108) configured to provide the person (112) access to the vehicle when the person (112) is verified as a registered person.

2. The system (100) according to claim 1, the pre-registered motion-characteristic of the at least one registered person being stored in a respective user profile, the respective user profile being created for each registered person. further comprising a storage unit (106) configured to store the at least one user profile.

3. The system (100) according to claim 2, the user profile being stored in a storage unit (106).

4. The system (100) according to any of claims 1 to 3, the processing unit (108) is configured to provide the person (112) being verified as the at least one registered person access to the vehicle (200) by unlocking the vehicle (200) and/or by setting vehicle functions and/or settings according to an access level being assigned to the user profile of the verified person (112).

5. The system (100) according to any of claims 1 to 4, further comprising a registration unit (110) configured to learn the at least one motion-characteristic of a person (112) to be registered, and configured to register the person (112) by storing the previously learned motion-characteristic as the pre-registered motion-characteristic in the user profile.

6. The system (100) according to claim 5, wherein the registration unit (110) uses machine learning to register the at least one motion-characteristic of the person (112) to be registered.

7. The system (100) according to any of claims 3 to 6, wherein the storage unit (106) is a local storage unit provided in the vehicle (200), or a distributed storage unit provided in a cloud or a resource accessed through an edge communication.

8. The system (100) according to claim 7, wherein the distributed storage unit is configured to further comprise the sensor data processing unit (1022), the verification unit (104) and/or the processing unit (108).

9. The system (100) according to any of claims 1 to 8, wherein the at least one sensor (1021) is an ultrasound-based sensor, an electromagnetic-based sensor, an infrared-based sensor, and/or a laser-based sensor.

10. The system (100) according to any of claims 1 to 9, wherein the at least one motion-characteristic is a gait pattern, such as a time-interval between two steps, autocorrelation, cross-correlation of two steps in time, periodicity, seasonality, histogram skewness and multimodality of (short period) cumulative data, frequency content, wavelet content, and/or step intensity and/or walking rhythm and/or way of walking.

11. The system (100) according to any of claims 1 to 10, further comprising at least one visual-based sensor (202) configured to capture at least the one motion-characteristic visually.

12. The system (100) according to claim 11, wherein the motion-characteristic captured visually by the visual-based sensor (202) is based on silhouette images.

13. A vehicle (200) comprising an access verification system (100) according to any of claims 1 to 12.

14. An access verification method (300) for a vehicle (200), comprising:
non-visually detecting a motion within a predefined periphery of the vehicle (200);
determining if the detected motion corresponds to at least one motion-characteristic of a person (112),
activating a verification unit (104), when the motion detected by the at least one sensor (1021) is a motion-characteristic of a person (112), and when the detected motion is equal to or larger than a predetermined motion-threshold,
determining, by the verification unit (104), if the person (112) detected within the predefined periphery of the vehicle (200) corresponds to a registered person by comparing the at least one characteristic of the person (112) detected by the monitoring unit (104) with at least one pre-registered motion-characteristic of the at least one registered person;
providing the person (112) access, when the person (112) is verified as a registered person.

15. Computer program instructions, which, when running on means that provide data processing functions, carry out the method (200) according to claim 14.
